# EUROPÄISCHE PATENTANMELDUNG

(11) **EP 0 833 188 A2**
(43) Veröffentlichungstag der Anmeldung: **01.04.1998**
(21) Anmeldenummer: 96308342.3
(22) Anmeldetag: 18.11.1996
(51) Int. Cl.: G02F 1/35, G02F 2/00, H01S 3/23

(54) **Optische Schwellwertschaltung**

(30) Priorität: 25.09.1996 EP 96306955
(71) Anmelder: SIEMENS AKTIENGESELLSCHAFT, 80333 München (DE)
(72) Erfinder: Derr, Frowin, Dr., 81379 München (DE); Arkwright, John W., Dr., Coogee, N.S.W. 2034 (AU)

(57) **Zusammenfassung**

In einer optischen Schwellwertschaltung mit einem eingangsseitig mit intensitätsmoduliertem Licht einer Eingangswellenlänge und CW-Licht einer Ausgangswellenlänge beaufschlagten optischen Interferometer sind beide Interferometerzweige mit einem Laser mit für alle Eingangslichtpegel oberhalb eines Schwellwerts auf einen festen Wert begrenzter Phasenänderung versehen, wobei die beiden festen Phasenänderungswerte um π voneinander differieren.

## Beschreibung

Zukunftssichere optische Telekommunikationsnetze haben hohe Anforderungen bezüglich Kapazität und Flexibilität zu erfüllen. Solche Anforderungen werden bei einer Übertragung und Vermittlung im optischen Frequenzmultiplex (Wellenlängenmultiplex WDM) optimal erfüllt. Beim optischen Frequenzmultiplex (Wellenlängenmultiplex - WDM) ist auf einer Faser eine Mehrzahl von Übertragungskanälen gebündelt, die durch ihre sich untereinander um einige 100 GHz unterscheidenden optischen Trägerfrequenzen (Wellenlängen) voneinander getrennt sind. Mit einem Wellenlängenmultiplex kann die Kapazität von optischen Übertragungsnetzen wesentlich vergrößert werden; durch WDM-Koppelanordnungen (Optical Cross Connects OCG) kann die Flexibilität solcher Netze erhöht werden. Solche optischen Cross-Connects weisen in der Regel sowohl Frequenzschaltstufen (Konverter) als auch Raumschaltstufen auf. Die in WDM-Koppelanordnungen vorgesehenen optischen Frequenzkonverter (Wellenlängen-Konverter) ermöglichen es durch optische Umsetzung eines optischen Signals von einer Eingangswellenlänge auf eine Ausgangswellenlänge, in photonischen Netzen die Blockierwahrscheinlichkeit für neu einzurichtende Verbindungen auch bei hoher Netzauslastung gering zu halten.

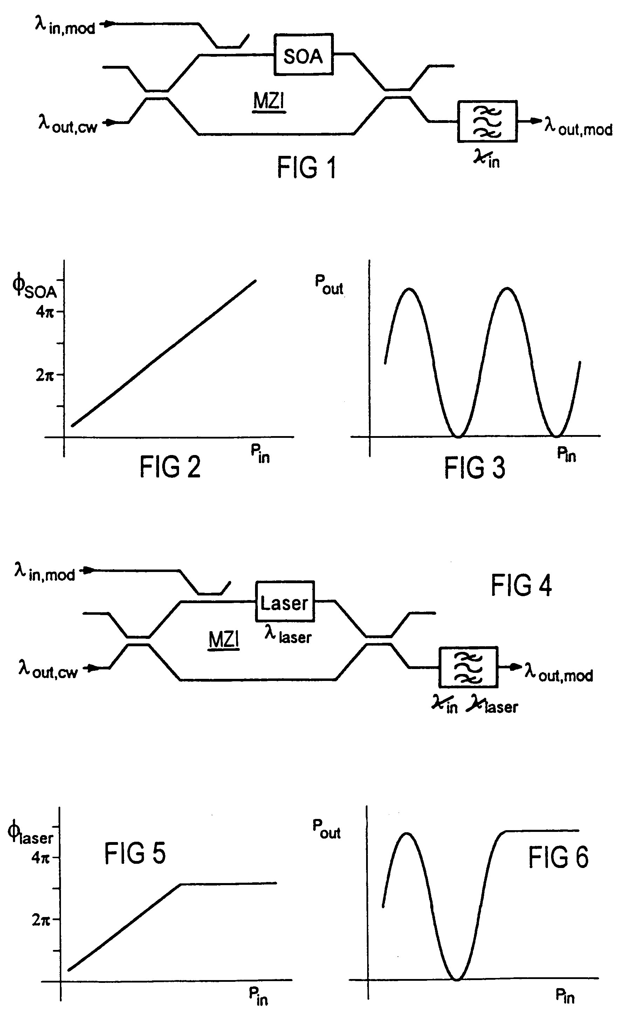

Zum Aufbau optischer Frequenz-Konverter sind verschiedene Realisierungsprinzipien bekannt, beispielsweise Cross-Gain Modulation oder Gain Compression in optischen Halbleiterverstärkern (Electronics Letters 30(1994)April, 720 ... 721) und Four-Wave Mixing in optischen Halbleiterverstärkern (Electronics Letters 31(1995)July, 1159 ... 1160; ECOC'94, vol.2, 635 ... 640). Die meistversprechenden Realisierungen basieren auf optischen Interferometer-Konfigurationen (wie Mach-Zehnder- oder Michelson-Interferometern), die auch eine gewisse Verbesserung des optischen Extinctions-Verhältnisses erlauben (Electronics Letters 31(1995)March, 454 ... 455; ECOC'94, vol.4, Post-deadline Papers, 67 ... 70). Ein solches optisch gesteuertes Mach-Zehnder-Interferometer MZI zur optischen Wellenlängenumsetzung ist in FIG 1 skizziert. In dieser Konfiguration wird die Phasen-Übertragungscharakteristik eines optischen Halbleiterverstärkers SOA optisch durch das intensitätsmodulierte Eingangssignal (λ_{in,mod}) gesteuert. Entsprechend der in FIG 2 skizzierten linearen Beziehung zwischen der optischen Eingangssignalleistung Pᵢₙ und der dadurch hervorgerufenen Phasenänderung Φ_{SOA} ist das generelle Schaltverhalten (Ausgangssignalpegel Pₒᵤₜ in Abhängigkeit vom Eingangssignalpegel Pᵢₙ) des Interferometers MZI typischerweise sinusförmig, wie dies auch aus FIG 3 ersichtlich wird (IEEE Photonics Technology Letters, 7(1995)October, 992 ...997).

Um ein besseres Schaltverhalten zu erhalten, wurde schon vorgeschlagen, im Interferometer MZI gemäß FIG 4 anstelle eines optischen Halbleiterverstärkers einen Halbleiterlaser vorzusehen, womit man in Abhängigkeit vom optischen Eingangssignal (λ_{in,mod}) eine für alle Eingangssignalleistungspegel Pᵢₙ oberhalb eines Schwellwerts auf einen festen Wert begrenzte Phasenänderung Φₗₐₛₑᵣ des Lasers erhält, wie dies in FIG 5 skizziert ist. Da der Lichtverstärkungsvorgang die hervorgerufene Phasenänderung Φₗₐₛₑᵣ bei der Laserschwelle klemmt, ist der optische Ausgangspegel Pₒᵤₜ bei allen Eingangsleistungspegeln oberhalb der Schwelle auf einen festen Wert begrenzt, wie dies auch aus FIG 6 ersichtlich wird. Durch entsprechende Auslegung des Lasers oder durch elektrische und/oder optische Vorerregung des Lasers, so daß eine optische Anregung der Vorrichtung bis zur Laserschwelle gerade einer Phasenänderung von genau π entspricht, kann ein Schaltverhalten erreicht werden, das einer Begrenzerfunktion für ein optisches "1"-Signal entspricht (siehe FIG 6).

Die Erfindung stellt sich nun die Aufgabe, eine Schaltungsanordnung anzugeben, deren Schaltverhalten einer Begrenzerfunktion auch für ein optisches "0"-Signal entspricht.

Die Erfindung betrifft eine optische Schwellwertschaltung mit einem eingangsseitig mit intensitätsmoduliertem Licht der Eingangswellenlänge und CW-Licht der Ausgangswellenlänge beaufschlagten optischen Interferometer, dessen einer Interferometerzweig mit einem Laser mit für alle Eingangslichtpegel oberhalb eines Schwellwerts auf einen festen Wert begrenzter Phasenänderung versehen ist und das ausgangsseitig ein Licht der Eingangswellenlänge und Licht der Laserwellenlänge sperrendes Filter aufweist; diese Schwellwertschaltung ist erfindungsgemäß dadurch gekennzeichnet, daß das Interferometer in seinem anderen Zweig mit einem zweiten Laser mit für alle Eingangslichtpegel oberhalb eines Schwellwerts auf einen zweiten festen Wert begrenzter Phasenänderung versehen ist, wobei der feste Phasenänderungswert des letzteren Lasers von dem festen Phasenänderungswert des ersteren Lasers um π differiert.

Die Erfindung ermöglicht eine vorteilhafte Realisierung einer optischen Schwellwertschaltung mit einem Begrenzerverhalten nicht nur für ein optisches "1"-Signal, sondern auch für ein optisches "0"-Signal, die zugleich als optischer Begrenzer und als optischer Wellenlängenkonverter wirkt. Sie kann in optischen Übertragungssystemen mit Intensitätsmodulation Anwendung finden und ermöglicht eine optische Wellenlängenumsetzung, wie man sie in optischen Wellenlängenmultiplex-Cross-Connects (WDM OCC) benötigt, einschließlich einer optischen 3R-Regeneration (Regenerating, Reshaping, Retiming). Dabei kann die optische Schwellwertschaltung in weiterer Ausgestaltung der Erfindung zu einem IO(Integrierte Optik)-Baustein integriert sein.

In einer weiteren Ausgestaltung der Erfindung kann die optische Schwellwertschaltung mit einem Mach-Zehnder-Interferometer mit Lasern oder mit mit Ionen der Seltenen Erden (wie Erbium, Yttrium) dotierten Fasern mit reflektierenden Gratings unterschiedlicher Reflektivität an beiden Enden in den beiden Zweigen gebildet sein.

In einer anderen Ausgestaltung der Erfindung kann die optische Schwellwertschaltung mit einem Michelson-Interferometer mit reflektierenden Lasern am Ende jedes Zweigs gebildet sein, wobei der Strahlteiler des Michelson-Interferometers durch einen (mit-)integrierten planaren 2x2-Koppler gebildet sein kann.

Weitere Besonderheiten der Erfindung werden aus der nachfolgenden näheren Erläuterung der Erfindung an Hand der Zeichnungen ersichtlich. Dabei zeigt
- FIG 1: das Blockschaltbild eines bekannten optisch gesteuerten Mach-Zehnder-Interferometers mit einem optischen Halbleiterverstärker zur optischen Wellenlängenumsetzung;
- FIG 2 und FIG 3: zeigen dazu die Beziehung zwischen optischem Eingangssignalpegel und dadurch hervorgerufener Phasenänderung und das in der Abhängigkeit des Ausgangssignalpegels vom Eingangssignalpegel zum Ausdruck kommende generelle Schaltverhalten.
- FIG 4: zeigt das Blockschaltbild eines optisch gesteuerten Mach-Zehnder-Interferometers mit einem Laser zur optischen Wellenlängenumsetzung;
- FIG 5 und FIG 6: zeigen dazu die Beziehung zwischen optischem Eingangssignalpegel und dadurch hervorgerufener Phasenänderung und das in der Abhängigkeit des Ausgangssignalpegels vom Eingangssignalpegel zum Ausdruck kommende generelle Schaltverhalten.
- FIG 7: zeigt das Blockschaltbild eines optisch gesteuerten Mach-Zehnder-Interferometers gemäß der Erfindung mit zwei Lasern;
- FIG 8 und FIG 9: zeigen dazu die Beziehung zwischen optischem Eingangssignalpegel und dadurch hervorgerufener Phasenänderung und das in der Abhängigkeit des Ausgangssignalpegels vom Eingangssignalpegel zum Ausdruck kommende generelle Schaltverhalten.
- FIG 10: zeigt das Blockschaltbild eines optisch gesteuerten Mach-Zehnder-Interferometers gemäß der Erfindung mit zwei mit Ionen der Seltenen Erden (wie Erbium, Yttrium) dotierten Fasern mit reflektierenden Gratings an beiden Enden.
- FIG 11: zeigt das Blockschaltbild eines optisch gesteuerten Michelson-Interferometers gemäß der Erfindung mit reflektierenden Lasern am Ende jedes Zweigs, und
- FIG 12: zeigt das Blockschaltbild eines optisch gesteuerten Michelson-Interferometers gemäß der Erfindung mit durch einen (mit-)integrierten planaren 2x2-Koppler gebildetem Strahlteiler.

Die Zeichnungen FIG 1 bis FIG 6 wurden eingangs bereits kurz erläutert; weitere Erläuterungen dazu an dieser Stelle sind für das Verständnis der Erfindung nicht erforderlich.

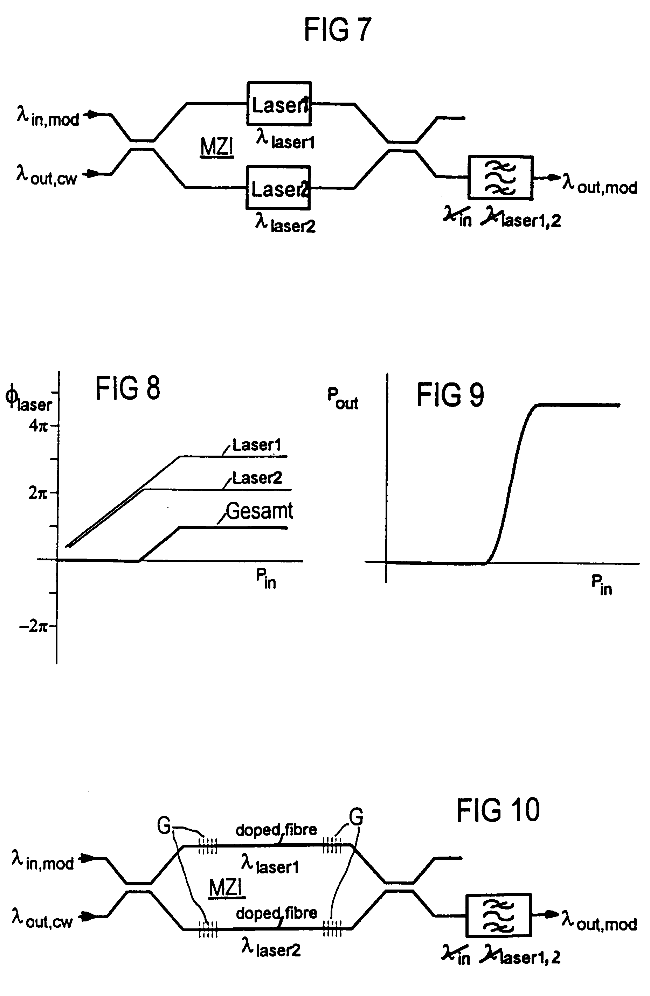

In FIG 7 ist schematisch in einem zum Verständnis der Erfindung erforderlichen Umfang ein Ausführungsbeispiel einer Schaltungsanordnung gemäß der Erfindung mit einem eingangsseitig mit intensitätsmoduliertem Licht einer Eingangswellenlänge λ_{in,mod} und CW-Licht einer Ausgangswellenlänge λ_{out,cw} beaufschlagten optischen Interferometer MZI dargestellt. Der eine Interferometerzweig ist mit einem Laser Laser1 mit für alle Eingangslichtpegel (Pᵢₙ in FIG 8 und FIG 9) oberhalb eines Schwellwerts auf einen ersten festen Wert begrenzter Phasenänderung (Φₗₐₛₑᵣ in FIG 8) versehen; der andere Interferometerzweig ist mit einem zweiten Laser Laser2 mit für alle Eingangslichtpegel (Pᵢₙ in FIG 8 und FIG 9) oberhalb eines Schwellwerts auf einen ersten festen Wert begrenzter Phasenänderung (Φₗₐₛₑᵣ in FIG 8) versehen, wobei der zweite feste Wert von dem ersten festen Wert um π differiert. Dies kann dadurch erreicht werden, daß man zwei Laser mit unterschiedlichem Loch-Verlust vorsieht oder aber durch elektrische oder optische Vorerregung der beiden Laser auf unterschiedliche Arbeitspunkte unterhalb der Laserschwelle. Ausgangsseitig ist ein Licht der Eingangswellenlänge λᵢₙ und Licht der Laserwellenlängen λₗₐₛₑᵣ₁ und λₗₐₛₑᵣ₂ sperrendes Filter vorgesehen.

Die Phasencharakteristiken der beiden Laser Laser1 und Laser2, d.h. die Beziehung zwischen der optischen Eingangssignalleistung Pᵢₙ und der dadurch hervorgerufenen jeweiligen Phasenänderung Φₗₐₛₑᵣ₁ bzw. Φₗₐₛₑᵣ₂ und die daraus resultierende Gesamtcharakteristik des Interferometers MZI gemäß FIG 7 sind in FIG 8 skizziert; in FIG 9 ist das das generelle Schaltverhalten, d.h. der Ausgangssignalpegel Pₒᵤₜ in Abhängigkeit vom Eingangssignalpegel Pᵢₙ skizziert.

Das in FIG 7 dargestellte Mach-Zehner-Interferometer MZI kann in einer Hybrid-Lösung mit Faser-Zweigen und einem Laser in jedem Zweig realisiert sein. Ein Abgleich der Schaltungsanordnung in ungestörtem Zustand führt zu einem definierten Ausgangszustand des Mach-Zehner-Interferometers; nach dessen Erreichen führt jegliche differentielle Phasenänderung zu einer Modulation des Ausgangssignals. Der Abgleich der Schaltungsanordnung ist besonders leicht, wenn diese zu einem IO(Integrierte Optik)-Baustein integriert ist, da dann Störungen wie Temperaturänderungen oder Aging beide Zweige in gleicher Weise berühren.

Alternativ zu einer Hybrid-Lösung kann das Mach-Zehner-Interferometer mit den beiden Lasern in seinen beiden Zweigen auch zu einem IO(Integrierte Optik)-Baustein integriert sein. IO-Mach-Zehner-Interferometer sind an sich (z.B. aus Zeitschrift Laser und Optoelektronik, Nr.4/1986, 323 ... 337,) bekannt, so daß es hier insoweit keiner weiteren Erläuterungen bedarf.

In FIG 10 ist schematisch ein anderes Ausführungsbeispiel einer Schaltungsanordnung gemäß der Erfindung mit einem eingangsseitig mit intensitätsmoduliertem Licht einer Eingangswellenlänge λ_{in,mod} und CW-Licht einer Ausgangswellenlänge λ_{out,cw} beaufschlagten optischen Mach-Zehner-Interferometer MZI dargestellt. Die beiden Interferometerzweige sind hier mit mit Ionen der Seltenen Erden (wie Erbium und Yttrium) dotierten Fasern doped fibre mit reflektierenden Gratings G an beiden Enden gebildet, wobei das jeweils dotierte Element vom Wellenlängenbereich der zu konvertierenden Signale abhängt. Durch unterschiedliche Ausgestaltung der Reflektivität der Gratings erhält man wiederum einen der Darstellung in FIG 8 entsprechenden Abstand π zwischen den Phasencharakteristiken der beiden Zweige und damit ein gleiches Schaltungsverhalten, wie es aus FIG 8 und FIG 9 für die Schaltungsanordnung gemäß FIG 7 ersichtlich ist.

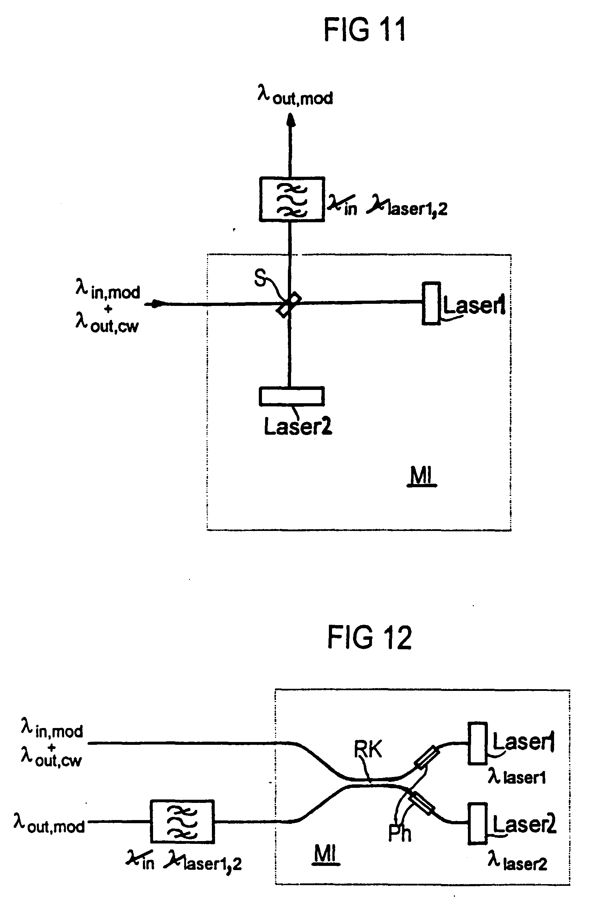

In FIG 11 und FIG 12 sind schematisch zwei Ausführungsbeispiele von Schwellwertschaltungen gemäß der Erfindung mit einem eingangsseitig mit intensitätsmoduliertem Licht der Eingangswellenlänge λ_{in,mod} und CW-Licht der Ausgangswellenlänge λ_{out,cw} beaufschlagten optischen Michelson-Interferometer MI mit einem reflektierenden Laser am Ende jedes Zweigs dargestellt.

Dabei basiert die Darstellung in FIG 11 auf einer Hybrid-Realisierung des Michelson-Interferometers MI auf der Grundlage eines - erforderlichenfalls mit einer zusätzlichen Bohrung für die richtungsgetrennte Lichtstrahlführung versehenen - optischen bidirektionalen Moduls, wie es beispielsweise das in der Zeitschrift Components 31(1993)2, 54 ... 57, beschriebene Modul BIDI für bidirektionale optische Übertragung darstellt. Einen der Darstellung in FIG 8 entsprechenden Abstand π zwischen den Phasencharakteristiken der beiden Zweige des Michelson-Interferometers bei einem optischen Leistungspegel oberhalb der Schwelle und damit ein gleiches Schaltungsverhalten, wie es aus FIG 8 und FIG 9 für die Schaltungsanordnung gemäß FIG 7 ersichtlich ist, kann man durch Betrieb der reflektierenden Laser an den Enden der beiden Zweige mit entsprechend unterschiedlichen Vorströmen erhalten. Als Laser können insbesondere DFB-Laser verwendet werden, deren Eingangsfacetten die Signalwellenlängen nicht reflektieren.

Alternativ zu einer Hybrid-Realisierung mit einem halbdurchlässigen Spiegel (S in FIG 11) als Strahlteiler kann der Strahlteiler des Michelson-Interferometers MI auch durch einen (mit-)integrierten planaren 2x2-Koppler RK (in FIG 12) gebildet sein. Man erhält dann eine Konfiguration, wie sie in FIG 12 skizziert ist.

Um einen Abgleich des Interferometers zu erleichtern, können zusätzliche Phasenschieberelemente in einen oder beide Zweige des Interferometers eingefügt sein. Dies ist auch in FIG 12 angedeutet, wo solche Phasenschieberelemente mit Ph bezeichnet sind. Realisiert sein kann ein solches Phasenschieberelement mit einem einem individuellen elektrischen Vorsstrom zugänglichen Teil des Halbleiterchips außerhalb der Laser-Resonators. Eine Änderung des Vorstromes modifiziert dann die Phase des das Element durchlaufenden Signals. Generell kann jede zur Modifizierung der Phase eines durchlaufenden optischen Signals geeignete Komponente für diesen Zweck benutzt werden.

## Patentansprüche

1. Optische Schwellwertschaltung mit einem eingangsseitig mit intensitätsmoduliertem Licht der Eingangswellenlänge (λ_{in,mod}) und CW-Licht der Ausgangswellenlänge (λ_{out,cw}) beaufschlagten optischen Interferometer (MZI; MI), dessen einer Interferometerzweig mit einem Laser (Laser1) mit für alle Eingangslichtpegel (Pᵢₙ) oberhalb eines Schwellwerts auf einen festen Wert begrenzter Phasenänderung (Φₗₐₛₑᵣ) versehen ist und das ausgangsseitig ein Licht der Eingangswellenlänge (λᵢₙ) und Licht der Laserwellenlänge (λₗₐₛₑᵣ) sperrendes Filter aufweist,
**dadurch gekennzeichnet,**
daß das Interferometer (MZI; MI) in seinem anderen Zweig mit einem zweiten Laser (Laser2) mit für alle Eingangslichtpegel (Pᵢₙ) oberhalb eines Schwellwerts auf einen zweiten festen Wert begrenzter Phasenänderung (Φₗₐₛₑᵣ) versehen ist, wobei der feste Phasenänderungswert des letzteren Lasers (Laser2) von dem festen Phasenänderungswert des ersteren Lasers (Laser1) um π differiert.

2. Optische Schwellwertschaltung nach Anspruch 1,
**dadurch gekennzeichnet,**
daß sie zu einem IO(Integrierte Optik)-Baustein integriert ist.

3. Optische Schwellwertschaltung nach Anspruch 1 oder 2,
**dadurch gekennzeichnet,**
daß sie mit einem Mach-Zehnder-Interferometer (MZI)mit Lasern (Laser1, Laser2) in den beiden Zweigen gebildet ist.

4. Optische Schwellwertschaltung nach Anspruch 2 und 3,
**dadurch gekennzeichnet,**
daß sie mit einem Mach-Zehnder-Interferometer (MZI) mit mit Ionen der Seltenen Erden wie Erbium, Yttrium dotierten Fasern (doped fibre) in den beiden Zweigen und reflektierenden Gratings (G) unterschiedlicher Reflektivität an beiden Enden gebildet ist.

5. Optische Schwellwertschaltung nach Anspruch 1 oder 2,
**dadurch gekennzeichnet,**
daß sie mit einem Michelson-Interferometer (MI) mit mit unterschiedlichem Vorstrom betriebenen reflektierenden Lasern (Laser1, Laser2) am Ende jedes Zweigs gebildet ist.

6. Optische Schwellwertschaltung Anspruch 2 und 5,
**dadurch gekennzeichnet,**
daß der Strahlteiler des Michelson-Interferometers durch einen mitintegrierten planaren 2x2-Koppler (RK) gebildet ist.

7. Optische Schwellwertschaltung Anspruch 5 oder 6,
**dadurch gekennzeichnet,**
daß in wenigstens einem Zweig des Interferometers ein zusätzliches Phasenschieberelement (Ph) vorgesehen ist.
